# EUROPEAN PATENT SPECIFICATION

(11) **EP 2 170 967 B1**
(45) Date of publication and mention of the grant of the patent: **22.01.2014**
(21) Application number: 08773969.4
(22) Date of filing: 09.07.2008
(51) Int. Cl.: C08F 279/04, C08L 55/02, C08F 279/02, C08F 287/00, C08L 51/00

(54) **PROCESS FOR THE PREPARATION OF TRANSPARENT, IMPACT-RESISTANT, VINYL AROMATIC COPOLYMERS**
VERFAHREN ZUR HERSTELLUNG VON TRANSPARENTEN, SCHLAGZÄHEN VINYLAROMAT-COPOLYMEREN
PROCÉDÉ DE PRÉPARATION DE COPOLYMÈRES VINYLE AROMATIQUES, RÉSISTANTS AU CHOC, TRANSPARENTS

(30) Priority: 20.07.2007 IT MI20071468
(43) Date of publication of application: 07.04.2010
(73) Proprietor: versalis S.p.A., 20097 San Donato Milanese (MI) (IT)
(72) Inventor: LONGO, Aldo, I-46100 Mantova (IT); CASALINI, Alessandro, I-46100 Mantova (IT)
(74) Representative: Maiwald Patentanwalts GmbH
(86) International application number: PCT/EP2008/005675
(87) International publication number: WO 2009/012900

(56) References cited:
- US-A- 5 387 650
- US-A- 5 990 236
- US-A1- 2006 122 331
- US-A1- 2006 155 063
- US-B1- 6 310 148
- US-B1- 6 482 897
- US-B2- 6 663 953

## Description

The present invention relates to a process for the preparation of transparent, impact-resistant, vinyl aromatic copolymers.

More specifically, the present invention relates to a continuous mass process for the preparation of impact-resistant vinyl aromatic copolymers, for example ABS (Acrylonitrile-Butadiene-Styrene) transparent resins, and the transparent copolymers thus obtained.

In the present description, all the conditions mentioned in the text should be considered as preferred conditions.

It is known that impact-resistant thermoplastic polymeric materials, such as ABS, are characterized by a continuous matrix, in which an elastomeric reinforcing material is immersed in the form of discontinuous particles. The biphasic impact-resistant materials are generally opaque. At least two synthesis strategies however are known for obtaining transparent biphasic polymers:
a. The two amorphous phases (resin and elastomer) are continuous and consist of block polymers with a lamellar or cylindrical structure and the dimensions of the domains of the two phases are lower than 1/20 of the light wave-length (in practice, the light passes through an amorphous material with a homogeneous composition, as heterogeneity does not cause refraction of the light). This strategy is widely used for styrene-butadiene block copolymers (transparent, impact-resistant PS) produced through anionic synthesis. International patent applications WO 97/36944 and WO 04/72172 also describe the preparation of transparent butadiene-SAN copolymers, obtained through "living" radicalic synthesis, but commercial polymers obtained through latter methods are not known.
b. The two amorphous phases (continuous resin phase and dispersed elastomeric phase) have the same refraction index. This is the most widely-used technique in the case of transparent ABS modified with PMMA.

A document relating to the subject of "styrene impact-resistant polymers" which also includes transparent polymers, is the following:
Echte A., Rubber - Toughened Styrene Polymers in Rubber - Toughened Plastics, Advances in Chemistry, Series nr. 222 (1989) Editor Riew K.C., ISBN 0841214883.

As is known, ABS is opaque as the refractive index (RI) of the Styrene-Acrylonitrile (SAN) copolymer is 1.58 - 1.56 (depending on the content of acrylonitrile) and that of polybutadiene rubber is about 1.51 and, in order to have transparency, it is necessary to have refractive indexes of the phases equal to the third decimal figure (Δn< 0.005).

A method for reaching transparency, described, for example, in the Echte A. document mentioned above, is to increase the refractive index of the elastomeric phase producing the elastomer by copolymerization of butadiene with styrene (RI of polystyrene = 1.59) in emulsion. In this way, a rubber is obtained with RI = 1.53 - 1.55 by varying the composition of the Styrene-Butadiene (SB) copolymer. Polymethyl methacrylate (PMMA) is grafted on the rubber particles thus obtained, and a grafted polymer with high elastomer content is obtained.

The resin phase is then added through mixing in the molten state, which consists of SAN (with an acrylonitrile content < 22% by weight) and PMMA (RI = 1.49) which are miscible with each other and form a homogeneous polymeric alloy having a refractive index lower than that of SAN. The overall PMMA content is higher than 40% and therefore the transparent ABS are, in fact, MABS.

Another known synthesis method, described in the patent US 4,767,833, is to copolymerize styrene and butadiene to obtain rubber particles with a refractive index which is higher than that of butadiene and then to graft a styrene - methyl methacrylate polymer possibly containing acrylonitrile, on this rubber. ,

The grafting reaction can be effected either in emulsion or in suspension or in mass. The acrylic monomer must be present in this synthesis method, whereas acrylonitrile can be absent. A product having optimum mechanical characteristics, transparent and colourless, is obtained but the chemical resistance may not be that of ABS.

In European patent EP 1,417,242, a process is described for preparing a transparent ABS product for extruded sheets. This is a Styrene-Butadiene elastomer grafted with styrene-methyl methacrylate - acrylonitrile with a minimum quantity of acrylonitrile of at least 0.5% and the particles of dispersed rubber must have an average diameter within the range of 150 - 550 nm.

US 6,310,148 discloses an example of a process for continuous mass production of impact-resistant vinyl aromatic copolymer compositions, while US 6,482,897 discloses a process for preparing resins provided with translucency. US 20060122331 discloses a mass polymerised high gloss rubber modified polymer composition comprising a continuous matrix of a polymer of monovinylidene aromatic monomer.

The Applicant has now found a new method for the preparation of transparent vinyl aromatic resins reinforced with an elastomer, which is alternative to the methods of the known art and.allows raw materials easily available on the market, to be used.

An object of the present invention therefore relates to a process for the continuous mass preparation of impact-resistant, transparent vinyl aromatic copolymers comprising:
A. preparing a solvent base essentially consisting of:
   - 100-70% by weight, preferably 100-80%, of at least one vinyl aromatic monomer;
   - 0-30% by weight, preferably 0-20%, of an inert organic solvent;
B. dissolving in the solvent base one or more elastomeric components, miscible with each other, consisting of random copolymers of butadiene and styrene or having butadiene and styrene blocks, wherein the total content of butadiene ranges from 40 to 55% by weight so as to have a total butadiene content in the solvent phase ranging from 3 to 20% by weight;
C. adding further inert organic solvent to the mixture of solvent and elastomers, together with at least one ethylenically-unsaturated nitrile, so that the final mixture obtained consists of:
   (i) 5-30% by weight of organic solvent;
   (ii) 30-50% by weight of a vinyl aromatic monomer;
   (iii) 3-20% by weight of an elastomeric component;
   (iv) 2-20% by weight of acrylic monomer;
   (v) 15-35% by weight of ethylenically-unsaturated nitrile;
D. possibly adding a chemical system comprising at least one polymerization initiator to the solution thus obtained;
E. polymerizing the final solution at a temperature ranging from 100 to 180°C.

At the end of the polymerization, after recovering the solid phase, a transparent, impact-resistant vinyl aromatic polymer is obtained, comprising a rigid matrix consisting of 50 to 70% by weight, preferably from 55 to 65%, of bound vinyl aromatic monomer, from 20 to 40% by weight, preferably from 25 to 38% of bound ethylenically-unsaturated nitrile monomer and from 3 to 20% by weight, preferably from 5 to 15%, of bound acrylic monomer, wherein from 1 to 25% by weight, with respect to the total weight of the resin, of an elastomeric phase, comprising an elastomeric component consisting of a copolymer of styrene and butadiene with a random sequence of the monomers or a block copolymer, or a mixture of random or block styrene and butadiene copolymers, is dispersed, so as to have a total content of bound butadiene monomer in the elastomeric base ranging from 40 to 55% by weight. The refractive index difference between the rigid matrix and elastomer proves to be lower than 0.005, generally lower than 0.004.

According to the present invention, the term "vinyl aromatic monomer", as used in the present description and claims, means a product corresponding to the following general formula: 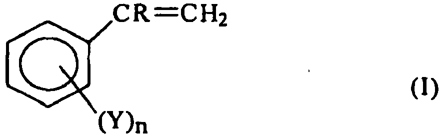 wherein R is hydrogen or a methyl group, n is zero or an integer between 1 and 5 and y is a halogen, such as bromine of chlorine, or an alkyl or alkoxyl radical having from 1 to 4 carbon atoms.

Examples of vinyl aromatic monomers having the general formula mentioned above, are: styrene, α-methyl styrene, methyl styrene, ethyl styrene, butyl styrene, dimethyl styrene, mono-, di-, tri-, tetra- and penta- chlorostyrene, bromostyrene, methoxystyrene, acetoxystyrene. Preferred vinyl aromatic monomers are styrene and/or α-methyl styrene.

Any acrylic monomer can be used for preparing the solvent base (a), but acid acrylic and methacrylic are preferred, as well as methyl acrylate and methyl methacrylate; ethyl acrylate and ethyl methacrylate; butyl acrylate and butyl methacrylate; 2-ethylhexylacrylate; and cyclohexy-lacrylate. Preferred acrylic monomers are butylacrylate and butyl methacrylate.

The ethylenically-unsaturated nitrile according to the present invention is acrylonitrile or methacrylonitrile. Acrylonitrile is the preferred monomer.

The inert organic solvent is such for both the monomers and the transparent, impact-resistant vinyl aromatic copolymer to be produced.

There is normally only one solvent and it is selected from aromatic hydrocarbons, such as ethylbenzene, toluene, xylenes or it can consist of a mixture of said products and/or a mixture of at least one of said aromatic products and a polar solvent, for example acetone, cyclohexanone, methyl ethyl ketone, as described in European patent EP 727,449. Ethylbenzene remains the preferred solvent.

The elastomeric component, essentially consisting of one or more types of styrene-butadiene rubber with a different styrene content, is dissolved in the solvent base comprising the vinyl aromatic monomer and possibly the inert organic solvent.

The dissolution takes place in a closed, stirred container, at a temperature lower than 100°C, in order to avoid the triggering of thermal polymerization, and at atmospheric pressure or slightly higher. In this phase, the temperature is preferably maintained at between 35 and 95°C.

Examples of styrene-butadiene elastomers are two-block linear copolymers of the S-B type, wherein S represents a polystyrene block having an average molecular weight Mw of between 5,000 and 80,000, whereas B represent a polybutadiene block having an average molecular weight Mw ranging from 2,000 to 250,000. In these elastomers, the quantity of block B preferably ranges from 40 to 55% by weight, if a single elastomer is used.

If a mixture of two block elastomers is used, these must be miscible with each other in the sense that they must form a single homogeneous phase. The quantity of block B ranges from 50 to 80% by weight with respect to the total S-B rubber, for the elastomer with a high butadiene content, and from 20 to 35% by weight with respect to the total S-B rubber, for the elastomer with a low butadiene content. In this case, preferred products are styrene-butadiene block copolymers having a butadiene content of 60% by weight and a viscosity in solution, measured at 23°C in a solution at 5% by weight of styrene, ranging from 35 and 50 cPs and styrene-butadiene block copolymers having a butadiene content equal to 25% by weight and a viscosity in solution, measured at 23°C in a solution at 5% by weight of styrene, ranging from 5 to 25 cPs.

Other examples of elastomers which can be used in the process, object of the present invention, are those mentioned in European patent 606,931.

At least a polymerization catalytic system can be added to the solution thus prepared, in a quantity ranging from 0 to 0.5% by weight with respect to the total, preferably from 0.02 to 0.5%, consisting of one or more free radical initiators. The free radical initiators are selected in particular from those having an activation temperature higher than 50°C. Typical examples of polymeriza-tion initiators are azo-derivatives, such as 4,4'-bis-(diisobutyronitrile), 4,4'-bis(4-cyanopentanoic acid), 2,2'-azobis(2-amidinopropane) dihydrochloride, or peroxides, hydro-peroxides, percarbonates and peresters.

In general, preferred free radical initiators are peroxides selected from t-butyl isopropyl mono-peroxycarbonate, t-butyl 2-ethylhexyl monoperoxy carbonate, dicumyl peroxide, di-t-butyl peroxide, 1,1-di(t-butylperoxy) cyclohexane, 1,1-di(t-butylperoxy)-3,3,5-trimethyl cyclohexane (di-ter-butylperoxy cyclohexane), t-butylperoxyacetate, cumyl t-butyl peroxide, t-butyl peroxybenzoate and t-butyl peroxy-2-ethyl hexanoate.

Other additives which can be added to the polymeriza-tion mixture are those traditionally known and used for the preparation of transparent, impact-resistant vinyl aromatic copolymers. For example the polymerization mixture can include a molecular-weight regulator such as a mercaptan selected from n-octyl mercaptan, n-dodecyl mercaptan, t-dodecyl mercaptan, mercaptoethanol. Other additives are selected, for example, from antioxidants, UV stabilizers, antistatic agents.

At the end of the preparation of the reaction mixture, the latter is fed to the polymerization section, preferably consisting of one or more tubular reactors (PFR) situated in series. Tubular reactors are apparatuses known in the art and to experts in the field, described, for example, in "Chemical Reaction Engineering", second edition, John Wiley & Sons, 1972, page 97-123.

The polymerization is carried out until a solid content equal to 50-80% by weight is obtained. The molten mass is then discharged from the polymerization section and sent to a polymer recovery section, which includes a heat exchanger, for bringing the reaction mass to a temperature of over 200-220°C, and a devolatilization unit for the recovery of the solvent and non-reacted monomers, recycled to the mixing section, and the oligomers. More specific details on the polymerization conditions can be found in European patent EP 400,479.

Some illustrative examples are provided hereunder for a better understanding of the present invention and for its embodiment.

### EXAMPLE 1

2.83 kg of SB (Styrene-Butadiene) block copolymer Finaclear 520 (25% by weight of butadiene) and 10.64 kg of SB BUNA BL 6533T block copolymer (60% by weight of butadiene) are dissolved in 134.11 kg of styrene, in a stirred tank, in a nitrogen environment, at 80°C for 4 hours. The average composition of the SB mix proves to be: 52% butadiene, 48% styrene.

After cooling to 40°C, 43.76 kg of ethylbenzene are added, together with 58.67 kg of butylacrylate, 91 g of di-ter-butylperoxy cyclohexane 50% in mineral oil, 539 g of ter-dodecyl mercaptan, 168 g of octadecyl 3-(3',5'-di-ter-butyl 4'-hydroxy-phenyl) propionate.

The solution prepared above is transferred to an intermediate storage tank, under a nitrogen atmosphere, and is fed therefrom in continuous, with a flow-rate of 22.3 kg/hour, into a stirred reactor kept under a nitrogen atmosphere at 90°C. Acrylonitrile is also fed in continuous into the same stirred container, with a flow-rate of 7.7 kg/hour.

The reaction mixture thus obtained is fed in continuous to two PFR reactors, in series, each having a reaction volume of 100 liters, each equipped with three thermostat-regulated areas, with the following thermal profile: 108°C, 118°C, 123°C, 144°C, 152°C, 156°C wherein each temperature represents the average temperature of the reaction mixture in a certain area.

The reaction mixture at the outlet of the second PFR, containing 70-75% of polymer, enters a vacuum container (20 mbar residual), passing through an exchanger with thermostat oil at 240°C, where the separation of the polymer from the solvent and non-reacted monomers takes place. The polymer leaves the lower part of the vacuum container and is granulated. The data relating to the copolymer obtained, evaluated from 3 mm injection-moulded test samples, are indicated in the following tables.

### EXAMPLE 2

4.23 kg of an SB block copolymer Finaclear 520 and 15.94 kg of an SB block copolymer BUNA BL 6533T are dissolved in 116.86 kg of styrene, in a nitrogen atmosphere, at 80°C, for 4 hours, in a tank similar to that of example 1.

The average composition of the SB mix proves to be 52% by weight of butadiene and 48% by weight of styrene.

After cooling to 40°C, 61.84 kg of ethyl benzene, 51.13 kg of butyl acrylate, 98 g of di-ter-butyl peroxide cyclohexane at 50% in mineral oil, 586 g of ter-dodecyl mercaptan, 163 g of octadecyl 3-(3'-di-ter-butyl 4'-hydroxy-phenyl) propionate are added.

The solution thus prepared is transferred to an intermediate storage tank, under a nitrogen atmosphere, and is fed therefrom in continuous, with a flow-rate of 23.0 kg/hour, into a stirred container kept under a nitrogen atmosphere at 90°C. Acrylonitrile is also fed in continuous into the same stirred reactor with a flow-rate of 7.0 kg/hr,.

The reaction mixture thus obtained is fed in continuous to two PFR reactors in series, as in example 1 and the same procedure is followed, with the reaction and separation under vacuum of the polymer obtained from the solvent and residual monomers, until granulation. The data relating to the copolymer obtained, evaluated from injection-moulded test samples having a thickness of 3 mm, are indicated in the following tables.

### EXAMPLE 3

4.66 kg of SB block copolymer Finaclear 520 and 34.57 kg of SB block copolymer BUNA BL 6533T are dissolved in 109.87 kg of styrene, in a tank similar to that of example 1, in a nitrogen atmosphere, at 80°C, for 4 hours. The average composition of the SB mix proves to be 55% by weight of butadiene and 45% of styrene.

After cooling to 40°C, 79.60 kg of ethyl benzene are added, together with 21.30 kg of butyl acrylate, 135 g of di-ter-butyl peroxy cyclohexane at 50% in mineral oil, 1177 g of ter-dodecyl mercaptan, 163 g of octadecyl 3-(3',5'-di-ter-butyl 4'-hydroxy-phenyl) propionate.

The solution thus prepared is transferred to an intermediate storage tank in a nitrogen atmosphere, and is fed therefrom in continuous, with a flow-rate of 22.3 kg/hour, to a stirred reactor kept under a nitrogen atmosphere at 90°C. Acrylonitrile is also fed in continuous to the same container with a flow-rate of 7.7 kg/hour.

The reaction mixture thus obtained is fed in continuous to two PFR reactors in series, as in example 1, and the same procedure is followed, with the reaction and separation under vacuum of the polymer obtained from the solvent and residual monomers, until granulation. The data relating to the copolymer obtained, evaluated from injection-moulded test samples having a thickness of 3 mm, are indicated in the following tables.

Table 1 shows the composition data of the copolymers obtained in examples 1-3.

**Table 1**

| Weight % composition | Example 1 | Example 2 | Example 3 |
|---|---|---|---|
| Styrene | 58.5 | 58.1 | 54.6 |
| Acrylonitrile | 26.4 | 25.2 | 30.0 |
| Butyl acrylate | 11.8 | 11.5 | 5.1 |
| Butadiene | 3.3 | 5.2 | 10.3 |

Table 2 shows the physico-mechanical properties of the copolymers obtained in examples 1-3.

**Table 2**

| Properties | Unit | Ex. 1 | Ex. 2 | Ex. 3 |
|---|---|---|---|---|
| Mel Flow Rate 220°C/10kg | g/10' | 10.8 | 16.6 | 9.2 |
| Tensile ISO 527 | | | | |
| Stress at yield | MPa | 58.4 | 52.5 | 51.1 |
| Strain at yield | % | 2.9 | 2.8 | 3.2 |
| Stress at break | MPa | 35.5 | 33.4 | 43.4 |
| Strain at break | % | 13.0 | 19.2 | 3.7 |
| Elastic modulus | MPa | 2980 | 2830 | 2450 |
| IZOD impact strength, notched ISO 180/1A | kJ/m² | 4.4 | 6.0 | 22.0 |
| VICAT ISO 306 B50 | °C | 87.9 | 86.8 | 91.9 |
| Transmittance * | % | 90.0 | 88.0 | 85.0 |
| HAZE* | % | 4.0 | 5.0 | 7.0 |

| | | | | |
|---|---|---|---|---|
| * ASTM D1003-00 "Standard Test Method for Haze and Luminous Transmittance of Transparent Plastics" | | | | |

## Claims

1. A process for the continuous mass production of impact-resistant, transparent vinyl aromatic copolymers comprising:
A. preparing a solvent base essentially consisting of:
a. 100-70% by weight, preferably 100-80%, of at least one vinyl aromatic monomer;
b. 0-30% by weight, preferably 0-20%, of an inert organic solvent;
B. dissolving in the solvent base one or more elastomeric components, miscible with each other, consisting of random copolymers of butadiene and styrene or having butadiene and styrene blocks, wherein the total content of bound butadiene ranges from 40 to 55% by weight so as to have a total bound butadiene content in the solvent phase ranging from 3 to 20% by weight;
C. adding further inert organic solvent to the mixture of solvent and elastomers, together with at least one ethylenically-unsaturated nitrile, so that the final mixture obtained consists of:
(i). 5-30% by weight of organic solvent;
(ii). 30-50% by weight of a vinyl aromatic monomer;
(iii). 3-20% by weight of an elastomeric component;
(iv). 2-20% by weight of acrylic monomer;
(v). 15-35% by weight of ethylenically-unsaturated nitrile;
D. possibly adding a chemical system comprising at least one polymerization initiator to the solution thus obtained;
E. polymerizing the final solution at a temperature ranging from 100 to 180°C.

2. The process according to claim 1, wherein the vinyl aromatic monomer is styrene and/or α-methyl styrene.

3. The process according to claim 1 or 2, wherein the acrylic monomer is selected from butyl acrylate and butyl methacrylate.

4. The process according to claim 1, 2 or 3, wherein the ethylenically-unsaturated nitrile is acrylonitrile.

5. The process according to any of the previous claims, wherein the elastomer is a styrene-butadiene block copolymer having a bound butadiene content ranging from 40 to 55% by weight.

6. The process according to any of the previous claims from 1 to 4, wherein the elastomer consists of two styrene(S)-butadiene(B) block copolymers, wherein the quantity of block B ranges from 50 to 80% by weight with respect to the total S-B rubber, in the elastomer with a high bound butadiene content, and between 20 and 35% by weight, with respect to the total S-B rubber, in the elastomer with a low bound butadiene content.

7. The process according to any of the previous claims, wherein the polymerization is carried out in one or more tubular reactors (PFR) in series.

8. A transparent, impact-resistant vinyl aromatic copolymer obtained by the process according to any of the previous claims, comprising a rigid matrix consisting of 50 to 70% by weight of a bound vinyl aromatic monomer, from 20 to 40% by weight of a bound ethylenically-unsaturated nitrile and from 3 to 20% by weight of a bound acrylic monomer, wherein from 1 to 25% by weight, with respect to the total weight of the resin, of an elastomeric phase comprising an elastomeric component consisting of a styrene and butadiene random or block copolymer or a mixture of styrene and butadiene random or block copolymers, is dispersed, so as to have a total content of bound butadiene in the elastomeric base, ranging from 40 to 55% by weight.

9. The vinyl aromatic copolymer according to claim 8, wherein the refractive index difference between the rigid matrix and the elastomer is lower than 0.005.

## Patentansprüche

1. Verfahren zur kontinuierlichen Massenproduktion von schlagfesten, transparenten vinylaromatischen Copolymeren, umfassend:
A. Herstellen einer Lösemittelbasis im wesentlichen bestehend aus:
a. 100-70 Gew.-%, vorzugsweise 100-80 %, mindestens eines vinylaromatischen Monomers;
b. 0-30 Gew.-%, vorzugsweise 0-20 % eines inerten organischen Lösemittels;
B. Lösen in der Lösemittelbasis von einer oder mehreren Elastomerkomponenten, mischbar miteinander, bestehend aus Zufallscopolymeren von Butadien und Styrol oder Butadien- und Styrolblöcke aufweisend, wobei der Gesamtgehalt des gebundenen Butadiens von 40 bis 55 Gew.-% reicht, um so einen gesamten gebundenen Butadiengehalt in der Lösemittelphase im Bereich von 3 bis 20 Gew.-% aufzuweisen;
C. Zusetzen von weiterem inertem organischem Lösemittel zu der Mischung von Lösemittel und Elastomeren, zusammen mit mindestens einem ethylenisch ungesättigten Nitril, so dass die erhaltene fertige Mischung besteht aus:
(i) 5-30 Gew.-% organisches Lösemittel;
(ii) 30-50 Gew.-% eines vinylaromatischen Monomers;
(iii) 3-20 Gew.-% einer elastomeren Komponente;
(iv) 2-20 Gew.-% eines Acrylmonomers;
(v) 15-35 Gew.-% eines ethylenisch ungesättigten Nitrils;
D. gegebenenfalls Zusetzen eines chemischen Systems umfassend mindestens einen Polymerisationsinitiator zu der so erhaltenen Lösung;
E. Polymerisieren der fertigen Lösung bei einer Temperatur im Bereich von 100 bis 180°C.

2. Verfahren nach Anspruch 1, wobei das vinylaromatische Monomer Styrol und/oder α-Methylstyrol ist.

3. Verfahren nach Anspruch 1 oder 2, wobei das Acrylmonomer ausgewählt ist aus Butylacrylat und Butylmethacrylat.

4. Verfahren nach Anspruch 1, 2 oder 3, wobei das ethylenisch ungesättigte Nitril Acrylonitril ist.

5. Verfahren nach einem der vorhergehenden Ansprüche, wobei das Elastomer ein Styrol-Butadien-Blockcopolymer mit einem gebundenen Butadiengehalt im Bereich von 40 bis 55 Gew.-% ist.

6. Verfahren nach einem der vorhergehenden Ansprüche von 1 bis 4, wobei das Elastomer aus zwei Styrol(S)-Butadien(B)-Blockcopolymeren besteht, wobei die Menge des Blocks B in dem Elastomer mit einem hohen gebundenen Butadiengehalt im Bereich von 50 bis 80 Gew.-% bezüglich des gesamten S-B-Kautschuks liegt und zwischen 20 und 35 Gew.-% bezüglich des gesamten S-B-Kautschuks in dem Elastomer mit einem niedrigen gebundenen Butadiengehalt.

7. Verfahren nach einem der vorhergehenden Ansprüche, wobei die Polymerisation in einem oder mehreren Röhrenreaktoren (PFR) in Reihe durchgeführt wird.

8. Ein transparentes, schlagfestes vinylaromatisches Copolymer erhalten durch das Verfahren gemäß einem der vorhergehenden Ansprüche, umfassend eine feste Matrix bestehend aus 50 bis 70 Gew.-% eines gebundenen vinylaromatischen Monomers, von 20 bis 40 Gew.-% eines gebundenen ethylenisch ungesättigten Nitrils und von 3 bis 20 Gew.-% eines gebundenen acrylischen Monomers, wobei von 1 bis 25 Gew.-% bezüglich des Gesamtgewichts des Kunststoffs einer Elastomerphase, umfassend eine Elastomerkomponente, bestehend aus einem Styrol- und einem Butadienzufalls- oder Blockcopolymer oder einer Mischung von Styrol- und Butadienzufalls- oder Blockcopolymeren dispergiert ist, um so einen Gesamtgehalt von gebundenem Butadien in der Elastomerbasis im Bereich von 40 bis 55 Gew.-% aufzuweisen.

9. Vinylaromatisches Copolymer gemäß Anspruch 8, wobei der Brechungsindexunterschied zwischen der festen Matrix und dem Elastomer weniger als 0,005 beträgt.

## Revendications

1. Procédé pour la production en masse en continu de copolymères vinylaromatiques transparents, résistants aux chocs, comprenant :
A. la préparation d'une base de solvant constituée essentiellement de :
a. 100 à 70 % en poids, de préférence 100 à 80 %, d'au moins un monomère vinylaromatique ;
b. 0 à 30 % en poids, de préférence 0 à 20 %, d'un solvant organique inerte ;
B. la dissolution, dans la base de solvant, d'un ou plusieurs composants élastomères, miscibles les uns avec les autres, constitués de copolymères statistiques de butadiène ou de styrène comportant des blocs de butadiène et de styrène, la teneur totale en butadiène lié étant située dans la plage allant de 40 à 55 % en poids de sorte que la teneur totale en butadiène lié dans la phase de solvant soit située dans la plage allant de 3 à 20 % en poids ;
C. l'addition de davantage de solvant organique inerte au mélange de solvant et d'élastomères, conjointement avec au moins un nitrile à insaturation éthylénique, de sorte que le mélange final obtenu soit constitué de :
(i) 5 à 30 % en poids de solvant organique ;
(ii) 30 à 50 % en poids d'un monomère vinylaromatique ;
(iii)3 à 20 % en poids d'un composant élastomère ;
(iv) 2 à 20 % en poids de monomère acrylique ;
(v) 15 à 35 % en poids de nitrile à insaturation éthylénique ;
D. éventuellement l'addition d'un système chimique comprenant au moins un amorceur de polymérisation à la solution ainsi obtenue ;
E. la polymérisation de la solution finale à une température située dans la plage allant de 100 à 180°C.

2. Procédé selon la revendication 1, dans lequel le monomère vinylaromatique est le styrène et/ou l'α-méthylstyrène.

3. Procédé selon la revendication 1 ou 2, dans lequel le monomère acrylique est choisi parmi l'acrylate de butyle et le méthacrylate de butyle.

4. Procédé selon la revendication 1, 2 ou 3, dans lequel le nitrile à insaturation éthylénique est l'acrylonitrile.

5. Procédé selon l'une quelconque des revendications précédentes, dans lequel l'élastomère est un copolymère séquencé de styrène-butadiène présentant une teneur en butadiène lié située dans la plage allant de 40 à 55 % en poids.

6. Procédé selon l'une quelconque des revendications 1 à 4, dans lequel l'élastomère est constitué de deux copolymères séquencés de styrène (S) - butadiène (B), la quantité du bloc B étant située dans la plage allant de 50 à 80 % en poids, par rapport au caoutchouc S-B total, dans l'élastomère présentant une forte teneur en butadiène lié, et étant comprise entre 25 et 35 % en poids, par rapport au caoutchouc S-B total, dans l'élastomère ayant une faible teneur en butadiène lié.

7. Procédé selon l'une quelconque des revendications précédentes, dans lequel la polymérisation est effectuée dans un ou plusieurs réacteur(s) tubulaire(s) (PFR) en série.

8. Copolymère vinylaromatique transparent et résistant aux chocs, obtenu par le procédé selon l'une quelconque des revendications précédentes, comprenant une matrice rigide constituée de 50 à 70 % en poids d'un monomère vinylaromatique lié, de 20 à 40 % en poids d'un nitrile à insaturation éthylénique lié, et de 3 à 20 % en poids d'un monomère acrylique lié, dans laquelle sont dispersés 1 à 25 % en poids, par rapport au poids total de la résine, d'une phase élastomère comprenant un composant élastomère constitué d'un copolymère séquencé ou statistique de styrène et de butadiène ou d'un mélange de copolymères séquencés ou statistiques de styrène et de butadiène, de sorte que la teneur totale en butadiène lié dans la base élastomère soit située dans la plage allant de 40 à 55 % en poids.

9. Copolymère vinylaromatique selon la revendication 8, dans lequel la différence d'indice de réfraction entre la matrice rigide et l'élastomère est inférieure à 0,005.
